# FASCICULE DE BREVET EUROPEEN

(11) **EP 4 033 086 B1**
(45) Date de publication et mention de la délivrance du brevet: **28.02.2024**
(21) Numéro de dépôt: 22151237.9
(22) Date de dépôt: 12.01.2022
(51) Int. Cl.: F02K 3/077, F02C 7/36

(54) **TURBOMACHINE D'AERONEF A TRIPLE FLUX EQUIPE D'UN MODULE DE TRANSMISSION DE PUISSANCE**
TURBOTRIEBWERK FÜR LUFTFAHRZEUG MIT DREIFACHER STRÖMUNG, DAS MIT EINEM LEISTUNGSÜBERTRAGUNGSMODUL AUSGESTATTET IST
TURBINE ENGINE FOR AIRCRAFT WITH TRIPLE FLOW PROVIDED WITH A POWER TRANSMISSION MODULE

(30) Priorité: 26.01.2021 FR 2100692
(43) Date de publication de la demande: 27.07.2022
(73) Titulaire: Safran Transmission Systems, 92700 Colombes (FR)
(72) Inventeur: MOULY, Guillaume Pierre, 77550 MOISSY-CRAMAYEL (FR)
(74) Mandataire: Gevers & Orès

(56) Documents cités:
- EP-A1- 3 569 854
- EP-A2- 3 067 541
- EP-B1- 2 831 396
- US-B2- 9 488 101

## Description

### Domaine technique de l'invention

La présente invention concerne le domaine des turbomachines à triple flux en particulier d'aéronef.

### Arrière-plan technique

L'état de l'art comprend notamment les documents WO-A1-2010/092263, FR-A1-2 987 416, FR-A1-3 008 462, FR-A1-3 008 463, US-B2-9,488,101, EP-A2-3 067 541, EP-B1-2 831 396 et FR-A1-3 041 054.

Les nouvelles générations de turbomachines à double flux, notamment celles ayant un haut taux de dilution, comportent un réducteur mécanique pour entraîner l'arbre d'une hélice de soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant l'hélice de soufflante.

Un tel réducteur comprend en général un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites. Les réducteurs peuvent être composés d'un ou plusieurs étages d'engrènement. Cet engrènement est assuré de différentes façons comme par contact, par friction ou encore par champs magnétique.

Dans la présente demande, on entend par « étage » ou « denture », au moins une série de dents d'engrènement avec au moins une série de dents complémentaires. Une denture peut être interne ou externe.

Un satellite peut comprendre un ou deux étages d'engrènement. Un satellite à simple étage comprend une denture qui peut être droite, hélicoïdale ou en chevron et dont les dents sont situées sur un même diamètre. Cette denture coopère à la fois avec le solaire et la couronne.

Un satellite à double étage comprend deux dentures qui sont situées sur des diamètres différents. Une première denture coopère avec le solaire et une seconde denture coopère en général avec la couronne.

Les nouvelles générations de turbomachines à triple flux sont des extensions des turbomachines à double flux à haut taux de dilution. Une turbomachine à triple flux comprend en général un réducteur mécanique pour entraîner l'hélice de soufflante ainsi qu'une autre hélice assimilable à une plus petite soufflante ou à une soufflante secondaire. Le réducteur fait partie d'un module de transmission de puissance qui est utilisé pour entrainer en rotation d'une part l'arbre de la soufflante principale et pour entraîner d'autre part l'arbre de la soufflante secondaire.

Cependant, les technologies proposées actuellement pour ce type de module de transmission de puissance ne sont pas satisfaisantes, en particulier d'un point de vue de leur complexité, de leur encombrement et de leur masse.

L'invention propose un perfectionnement permettant d'améliorer tout ou partie de ces inconvénients.

### Résumé de l'invention

L'invention concerne une turbomachine à triple flux pour un aéronef, comprenant :
- un générateur de gaz équipé d'une turbine comportant un arbre de turbine présentant un axe de rotation,
- un module de transmission de puissance comportant une entrée de couple relié audit arbre de turbine, une première sortie de couple et une seconde sortie de couple, ce module de transmission de puissance comportant un réducteur mécanique comprenant ladite entrée de couple et ladite première sortie de couple,
- une hélice de soufflante principale entraînée en rotation par un arbre principal accouplé à la première sortie de couple, cette hélice étant située en amont d'un premier bec annulaire de séparation de deux veines annulaires d'écoulement respectif d'un flux primaire interne et d'un flux secondaire externe,
- une hélice de soufflante secondaire entraînée en rotation par un arbre secondaire accouplé à la seconde sortie de couple, cette hélice étant située dans la veine d'écoulement du flux d'air interne et en amont d'un second bec annulaire de séparation de deux veines annulaires d'écoulement respectif d'un premier flux interne et d'un second flux externe,
caractérisée en ce que le module de transmission de puissance comprend en outre un satellite indépendant dudit réducteur et disposé en aval du réducteur, ce satellite étant engrené, d'une part, avec une denture externe de l'arbre de turbine, et d'autre part, avec une denture externe dudit arbre secondaire ou avec un arbre intermédiaire accouplé à cet arbre secondaire, ledit arbre de turbine traversant coaxialement cet arbre secondaire ou cet arbre intermédiaire.

L'invention propose ainsi d'associer au réducteur d'entraînement de l'hélice de la soufflante principale, un satellite supplémentaire pour l'entraînement de l'hélice de la soufflante secondaire. Le module de transmission de puissance comprend donc le réducteur et un satellite additionnel monté en aval du réducteur et indépendant du réducteur. Ce satellite peut avoir des dimensions relativement réduites et un encombrement relativement limité, ce qui facilite son intégration dans la turbomachine.

Cette solution est compatible d'un réducteur à plusieurs étages. Elle est également compatible d'un réducteur dont le porte-satellites est tournant comme les réducteurs épicycloïdaux ou différentiels. Elle est également compatible d'un réducteur à dentures droites, hélicoïdales ou en chevron. Elle est également compatible d'un réducteur à porte-satellites monobloc ou de type cage et porte-cage.

La turbomachine selon l'invention peut comprendre une ou plusieurs des caractéristiques suivantes, prises isolément les unes des autres, ou en combinaison les unes avec les autres :
- ledit satellite est unique ;
- ledit satellite s'étend autour d'un axe de rotation parallèle audit axe de rotation de l'arbre de turbine, ledit satellite comprenant une première denture engrenée avec la denture externe de l'arbre de turbine, et une seconde denture engrenée avec la denture externe de l'arbre secondaire ou de l'arbre intermédiaire ;
- ledit satellite s'étend autour d'un axe de rotation incliné par rapport audit axe de rotation de l'arbre de turbine, ledit satellite comprenant un pignon conique engrené à la fois avec les dentures externes, qui sont également coniques, de l'arbre de turbine et de l'arbre secondaire ou de l'arbre intermédiaire ;
- ledit satellite s'étend autour d'un axe de rotation confondu avec l'axe de rotation de l'arbre de turbine, ledit satellite ayant une forme annulaire et étant traversé par ledit arbre de turbine, ledit satellite comprenant une première denture engrenée avec la denture externe de l'arbre de turbine, et une seconde denture engrenée avec la denture externe de l'arbre secondaire ou de l'arbre intermédiaire ;
- le réducteur a un diamètre externe D1, et le satellite est entouré par une circonférence centrée sur ledit axe de rotation de l'arbre de turbine, cette circonférence ayant un diamètre externe maximal D2 qui est inférieur à D1 ;
- le module de transmission est situé à l'intérieur d'un carter annulaire qui comprend deux parois annulaires coaxiales définissant entre elles ladite veine d'écoulement du flux primaire ;
- l'arbre principal est guidé en rotation par au moins un palier porté par un premier support annulaire fixé audit carter, et l'arbre secondaire ou l'arbre intermédiaire est guidé en rotation par au moins un palier porté par un second support annulaire fixé audit carter ;
- le satellite comprend un axe physique qui le traverse et est entraîné en rotation par cet axe physique, cet axe physique étant porté par ledit second support de palier ou par ledit carter ;
   -- le satellite est traversé par un axe physique et est mobile en rotation sur cet axe physique, cet axe physique étant porté par ledit second support de palier ou par ledit carter ;
- le satellite est guidé en rotation par au moins un palier porté par un troisième support annulaire fixé audit carter, le troisième support annulaire étant situé entre les premier et second supports annulaires.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine à double flux pour un aéronef,
[Fig.2] la figure 2 est une vue partielle en coupe axiale d'un réducteur mécanique,
[Fig.3] la figure 3 est une vue schématique en coupe axiale d'une turbomachine à triple flux pour un aéronef,
[Fig.4] la figure 4 est une vue schématique en coupe axiale d'une turbomachine à triple flux pour un aéronef conformément à l'invention,
[Fig.5] la figure 5 est une vue schématique en coupe axiale d'une partie du module de transmission de puissance de la turbomachine selon l'invention, selon un premier mode de réalisation de cette invention,
[Fig.6] la figure 6 est une vue schématique en perspective du module de transmission de puissance selon le mode de réalisation de la figure 5,
[Fig.7] la figure 7 est une vue schématique en coupe axiale d'une partie du module de transmission de puissance de la turbomachine selon l'invention, selon un second mode de réalisation de cette invention ; et
[Fig.8] la figure 8 est une vue similaire à celle de la figure 4 et illustre une variante de réalisation de la turbomachine à triple flux selon l'invention.

### Description détaillée de l'invention

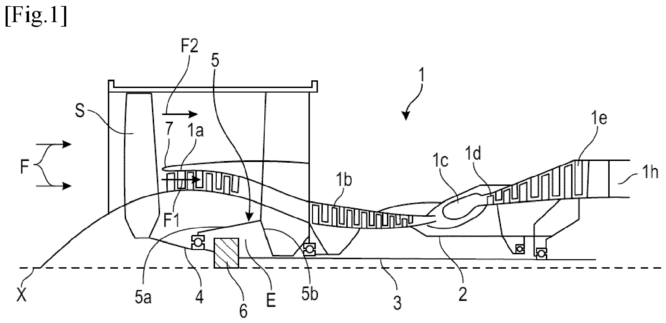

La figure 1 décrit une turbomachine 1 qui comporte, de manière classique, une soufflante S ou hélice de soufflante et un générateur de gaz comprenant un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La turbomachine 1 est ici à double flux dans la mesure où deux flux d'air, respectivement primaire F1 et secondaire F2, s'écoulent le long de l'axe longitudinal X de la turbomachine. Le flux d'entrée d'air F qui pénètre dans la turbomachine et traverse la soufflante S est divisé en deux en aval de la soufflante par un bec annulaire de séparation 17. Un flux d'air radialement interne s'écoule à l'intérieur du bec 17 et forme le flux primaire F1 qui s'écoule à l'intérieur du générateur de gaz. Un flux d'air radialement externe s'écoule à l'extérieur du bec 17 et forme le flux secondaire F2 qui s'écoule autour du générateur de gaz.

La soufflante S est entraînée par un arbre de soufflante 4 qui est entrainé par l'arbre BP 3 au moyen d'un réducteur 6. Ce réducteur 6 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

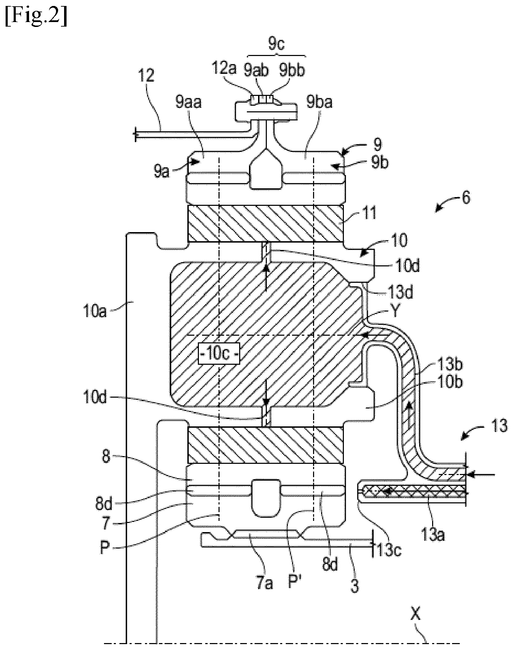

La figure 2 montre un réducteur épicycloïdal 6. En entrée, le réducteur 6 est relié à l'arbre BP 3, par exemple par l'intermédiaire de cannelures internes 7a. Ainsi, l'arbre BP 3 entraîne un pignon planétaire appelé le solaire 7. Classiquement, le solaire 7, dont l'axe de rotation est confondu avec celui de l'axe longitudinal X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenu par un châssis appelé porte-satellites 10. Chaque satellite 8 tourne autour de son propre axe Y, et engrène avec la couronne 9.

En sortie nous avons :
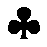 Dans cette configuration épicycloïdale, l'ensemble des satellites 8 entraine en rotation le porte-satellite 10a autour de l'axe X de la turbomachine. La couronne est fixée au carter moteur ou stator 5 via un porte-couronne 12 et le porte-satellites 10 est fixé à l'arbre de soufflante 4.
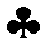 Dans une autre configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.
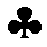 Dans une autre configuration différentielle, l'ensemble des satellites 8 est maintenu par un porte-satellites 10 qui est relié à un premier arbre de soufflante 5. Chaque satellite entraine la couronne qui est rapportée à un second arbre de soufflante contrarotatif 4 via un porte-couronne 12. Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange, les axes 10b et le châssis 10a peuvent être séparés en plusieurs pièces.

Pour les mêmes raisons citées précédemment, la denture d'un satellite peut être séparée en plusieurs hélices ou dents présentant chacun un plan médian P, P'. Dans notre exemple, nous détaillons le fonctionnement d'un réducteur dont chaque satellite comprend deux séries de dents en chevron coopérant avec une couronne séparée en deux demi-couronnes:
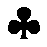 une demi-couronne amont 9a constituée d'une jante 9aa et d'une demi-bride de fixation 9ab. Sur la jante 9aa se trouve l'hélice avant engrenée avec une hélice de la denture 8d de chaque satellite 8. L'hélice de la denture 8d engrène également avec celle du solaire 7.
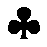 une demi-couronne aval 9b constituée d'une jante 9ba et d'une demi-bride de fixation 9bb. Sur la jante 9ba se trouve l'hélice arrière engrenée avec une hélice de la denture 8d de chaque satellite 8. L'hélice de la denture 8d engrène également avec celle du solaire 7.

Si les largeurs d'hélice varient entre le solaire 7, les satellites 8 et la couronne 9 à cause des recouvrements de denture, elles sont toutes centrées sur un plan médian P pour les dents amont et sur un autre plan médian P' pour les dents aval.

La figure 2 illustre ainsi le cas d'un réducteur à simple étage d'engrènement, c'est-à-dire qu'une même denture 8d de chaque satellite 8 coopère à la fois avec le solaire 7 et la couronne 9. Même si la denture 8d comprend deux séries de dents, ces dents ont le même diamètre moyen et forment une seule et même denture appelée chevron.

La demi-bride de fixation 9ab de la demi-couronne amont 9a et la demi-bride de fixation 9bb de la demi-couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 comprend des injecteurs 13a et des bras 13b. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

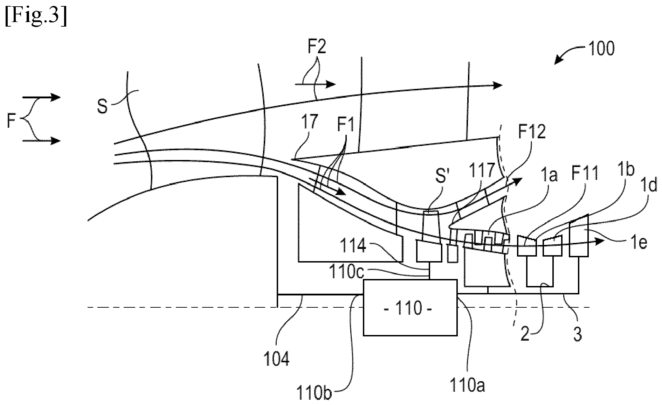

La figure 3 montre une turbomachine d'aéronef 100 à triple flux dans laquelle s'écoulent donc trois flux de manière coaxiales.

Les références utilisées dans la figure 1 sont utilisées dans la figure 3 pour désigner les mêmes éléments.

Le flux d'entrée d'air F qui pénètre dans la turbomachine 100 et traverse la soufflante S, qui est ici une soufflante principale, est divisé en deux en aval de la soufflante S par un bec annulaire de séparation 17. Un flux d'air radialement interne s'écoule à l'intérieur du bec 17 et forme le flux primaire F1. Un flux d'air radialement externe s'écoule à l'extérieur du bec 17 et forme le flux secondaire F2 qui s'écoule autour du générateur de gaz.

La turbomachine 1 comprend ici une soufflante secondaire S' qui comprend une hélice ou roue aubagée située dans la veine d'écoulement du flux primaire F1 et juste en amont d'un autre bec annulaire de séparation 117. Le flux primaire F1 traverse la soufflante secondaire S' et est divisé en deux par le bec 117, un premier flux d'air interne F11 s'écoule à l'intérieur du bec 117 et du compresseur 1a du générateur de gaz, et un second flux d'air externe F12 s'écoule à l'extérieur du bec 17 et autour du compresseur 1a pour être ensuite réinjecté dans la veine d'écoulement du flux secondaire F2.

La turbomachine 100 comprend un module de transmission de puissance 110 comportant une entrée de couple 110a relié à l'arbre basse pression 3, une première sortie de couple 110b reliée à l'arbre principal 104 d'entraînement du rotor et de l'hélice de la soufflante principale S, et une seconde sortie de couple 110c reliée à l'arbre secondaire 114 d'entraînement du rotor et de l'hélice de la soufflante secondaire S'.

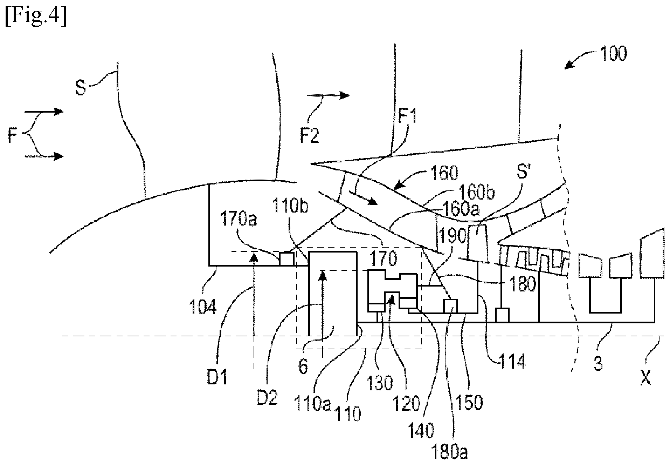

La figure 4 illustre une turbomachine à triple flux 100 conformément à l'invention.

Le module de transmission de puissance 110 de cette turbomachine 100 comprend un réducteur 6 similaire à celui des figures 1 et 2, et comprend en outre un satellite 120 indépendant du réducteur 6 et disposé en aval du réducteur 6.

Le réducteur 6 comprend l'entrée de couple 110a et la première sortie de couple 110b. Comme évoqué dans ce qui précède en relation avec la figure 2, l'entrée de couple 110a peut être formée par le solaire 7 du réducteur 6 qui est accouplé à l'arbre basse pression 3, et la sortie de couple 110b peut être formée par l'élément mobile du réducteur 6 parmi son porte-satellites 10a et sa couronne 12. Dans le cas de la figure 2 (réducteur épicycloïdal), c'est le porte-satellites 10a qui est mobile en rotation et donc accouplé à l'arbre principal 104 en vue de l'entraînement de la soufflante principale S. En variante, le réducteur pourrait être planétaire. Le réducteur 6 peut être à simple ou double étage.

Le satellite 120 est engrené, d'une part, avec une denture externe 130 de l'arbre basse pression 3, et d'autre part, avec une denture externe 140 de l'arbre secondaire 114 ou avec un arbre intermédiaire 150 accouplé à cet arbre secondaire 114. L'arbre basse pression 3 traverse coaxialement cet arbre secondaire 114 ou cet arbre intermédiaire 150. Les arbres 114 et 150 peuvent être accouplés ensemble par un jeu de cannelures axiales par exemple.

La denture externe 130 peut être formée d'une seule pièce sur l'arbre basse pression 3 ou peut être rapporté sur celui-ci et accouplé à celui-ci par un jeu de cannelures axiales par exemple.

De préférence, il y a qu'un seul satellite 120 de ce type, ce qui simplifie la transmission de puissance à la soufflante secondaire S'.

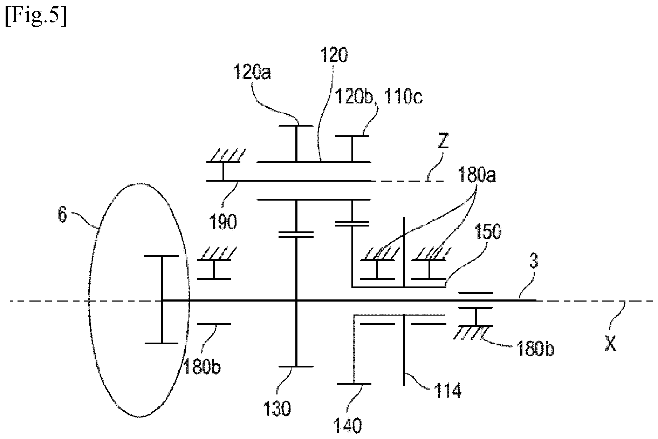

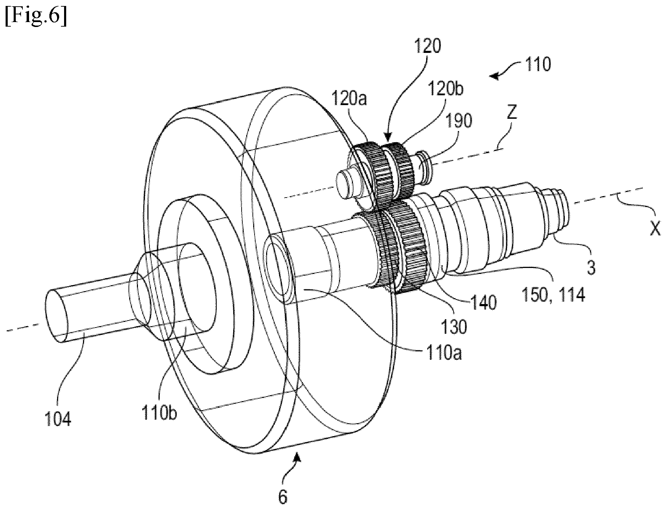

Selon un premier mode de réalisation représenté aux figures 5 et 6, le satellite 120 a un axe de rotation Z parallèle à l'axe longitudinal X.

Le satellite 120 comprend une première denture 120a engrenée avec la denture externe 130 de l'arbre basse pression 3, et une seconde denture 120b engrenée avec la denture externe 140 de l'arbre secondaire 114 ou de l'arbre intermédiaire 150. Cette seconde denture 120b forme la sortie de couple 110c précitée.

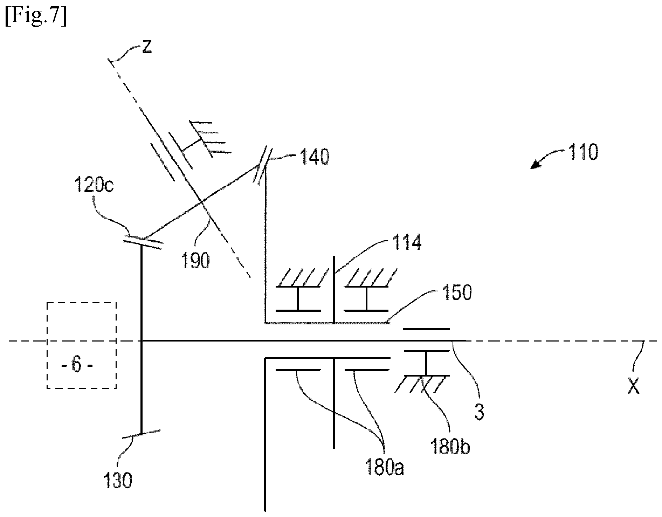

Comme on le voit à la figure 5, les dentures 120a, 120b peuvent avoir des diamètres différents. Ces dentures peuvent être droites ou hélicoïdales. Selon un second mode de réalisation représenté à la figure 7, le satellite 120 a un axe de rotation Z incliné par rapport à l'axe longitudinal X.

Le satellite 120 comprend un pignon conique 120c engrené à la fois avec les dentures externes 130, 140, qui sont également coniques, de l'arbre basse pression 3 et de l'arbre secondaire 114 ou de l'arbre intermédiaire 150.

La figure 4 montre que le réducteur 6 a un diamètre externe D1 et que le satellite 120 est entouré par une circonférence centrée sur l'axe X qui a un diamètre externe maximal D2. D2 est avantageusement inférieur à D1 de façon à ce que l'intégration du satellite 120 en aval du réducteur 6 n'entraîne pas une augmentation de l'encombrement radial du module de transmission de puissance 110. Autrement dit, l'encombrement radial de ce module 110 est imposé par le réducteur 6 et non pas par le satellite 120.

La figure 4 permet également de constater que le module de transmission 110 est situé à l'intérieur d'un carter annulaire 160 qui comprend deux parois annulaires 160a, 160b coaxiales définissant entre elles la veine d'écoulement du flux primaire F1.

L'arbre principal 104 est guidé en rotation par au moins un palier 170a porté par un premier support annulaire 170 fixé au carter 160. L'arbre secondaire 114 ou l'arbre intermédiaire 150 est guidé en rotation par au moins un palier 180a porté par un second support annulaire 180 fixé au carter 160. Les paliers 170a, 180a sont respectivement situés en amont et en aval du module 110 (figure 4).

Les figures 5 et 7 montrent que l'arbre basse pression 3 peut être guidé en rotation par un ou deux paliers au voisinage ou au niveau du module 110. Dans le cas de la figure 5, l'arbre 3 est guidé par deux paliers 180b dans cette zone, qui sont situés respectivement en amont et en aval des dentures 130, 140 afin de réduire le porte-à-faux de l'arbre 3.

Le satellite 120 est traversé par un axe physique 190, comme cela est schématiquement représenté à la figure 4.

Dans une première configuration illustrée à la figure 5, le satellite 120 est entrainé en rotation par cet axe physique 190. Un palier lisse ou des paliers à roulement peuvent alors être prévus entre le satellite 120 et l'axe physique 190. Cet axe physique 190 est porté par le support de palier 180 ou par le carter 160 directement.

Dans la variante illustrée à la figure 7, le satellite 120 peut être solidaire en rotation de l'axe physique 190 qui est alors guidé en rotation par au moins un palier. Ce palier est porté par le support de palier 180 ou par le carter 160 directement.

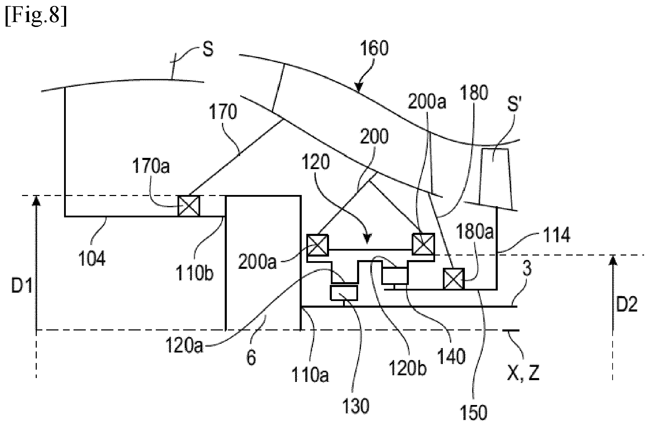

Dans la variante de réalisation de la figure 8, le satellite 120 a un axe de rotation Z qui est confondu avec l'axe de rotation X de l'arbre de turbine 3. Le satellite 120 a ici une forme annulaire et est traversé axialement par l'arbre de turbine 3. Le satellite 120 comprend une première denture 120a engrenée avec la denture externe 130 de l'arbre de turbine 3, et une seconde denture 120b engrenée avec la denture externe 140 de l'arbre secondaire 114 ou de l'arbre intermédiaire 150.

Dans l'exemple représenté, le satellite 120 est guidé en rotation par deux paliers 200a portés par un troisième support annulaire 200 fixé au carter 160. Ce troisième support 200 est ici situé entre les premier et second supports 170, 180. Les paliers 200a ont des diamètres équivalents, qui sont supérieurs à celui du palier 170b et inférieur à celui du palier 170a.

Le module de transmission de puissance selon l'invention permet, à partir de la vitesse rapide transmise par l'arbre basse pression 3, de fournir deux sorties avec deux vitesses différentes, tout en minimisant la masse et l'encombrement du réducteur de ce module. L'invention est particulièrement adaptée à des rapports de réduction faibles, par exemple inférieurs à deux, et à des puissances de l'ordre du mégawatt.

## Revendications

1. Turbomachine à triple flux (100) pour un aéronef, comprenant :
- un générateur de gaz équipé d'une turbine (1e) comportant un arbre de turbine (3) présentant un axe de rotation (X),
- un module de transmission de puissance (110) comportant une entrée de couple (110a) relié audit arbre de turbine (3), une première sortie de couple (110b) et une seconde sortie de couple (110c), ce module de transmission de puissance (110) comportant un réducteur mécanique (6) comprenant ladite entrée de couple (110a) et ladite première sortie de couple (110b),
- une hélice de soufflante principale (S) entraînée en rotation par un arbre principal (104) accouplé à la première sortie de couple (110a), cette hélice étant située en amont d'un premier bec annulaire (17) de séparation de deux veines annulaires d'écoulement respectif d'un flux primaire (F1) interne et d'un flux secondaire (F2) externe,
- une hélice de soufflante secondaire (S') entraînée en rotation par un arbre secondaire (114) accouplé à la seconde sortie de couple (110c), cette hélice étant située dans la veine d'écoulement du flux primaire (F1) et en amont d'un second bec annulaire (117) de séparation de deux veines annulaires d'écoulement respectif d'un premier flux interne (F11) et d'un second flux externe (F12),
**caractérisée en ce que** le module de transmission de puissance (110) comprend en outre un satellite (120) indépendant dudit réducteur (6) et disposé en aval du réducteur, ce satellite (120) étant engrené, d'une part, avec une denture externe (130) de l'arbre de turbine (3), et d'autre part, avec une denture externe (140) dudit arbre secondaire (114) ou avec un arbre intermédiaire (150) accouplé à cet arbre secondaire, ledit arbre de turbine (3) traversant coaxialement cet arbre secondaire (114) ou cet arbre intermédiaire (150).

2. Turbomachine selon la revendication 1, dans laquelle ledit satellite (120) est unique.

3. Turbomachine selon la revendication 1 ou 2, dans laquelle ledit satellite (120) s'étend autour d'un axe de rotation (Z) parallèle audit axe de rotation (X) de l'arbre de turbine (3), ledit satellite (120) comprenant une première denture (120a) engrenée avec la denture externe (130) de l'arbre de turbine (3), et une seconde denture (120b) engrenée avec la denture externe (140) de l'arbre secondaire (114) ou de l'arbre intermédiaire (150).

4. Turbomachine selon la revendication 1 ou 2, dans laquelle ledit satellite (120) s'étend autour d'un axe de rotation (Z) incliné par rapport audit axe de rotation (X) de l'arbre de turbine (3), ledit satellite (120) comprenant un pignon conique (120c) engrené à la fois avec les dentures externes (130, 140), qui sont également coniques, de l'arbre de turbine (3) et de l'arbre secondaire (114) ou de l'arbre intermédiaire (150).

5. Turbomachine selon la revendication 1 ou 2, dans laquelle ledit satellite (120) s'étend autour d'un axe de rotation (Z) confondu avec l'axe de rotation (X) de l'arbre de turbine (3), ledit satellite (120) ayant une forme annulaire et étant traversé par ledit arbre de turbine (3), ledit satellite (120) comprenant une première denture (120a) engrenée avec la denture externe (130) de l'arbre de turbine (3), et une seconde denture (120b) engrenée avec la denture externe (140) de l'arbre secondaire (114) ou de l'arbre intermédiaire (150).

6. Turbomachine selon l'une des revendications précédentes, dans laquelle le réducteur (6) a un diamètre externe D1, et le satellite (120) est entouré par une circonférence centrée sur ledit axe de rotation (X) de l'arbre de turbine (3), cette circonférence ayant un diamètre externe maximal D2 qui est inférieur à D1.

7. Turbomachine selon l'une des revendications précédentes, dans laquelle le module de transmission (110) est situé à l'intérieur d'un carter annulaire (160) qui comprend deux parois annulaires (160a, 160b) coaxiales définissant entre elles ladite veine d'écoulement du flux primaire (F1).

8. Turbomachine selon la revendication précédente, dans laquelle l'arbre principal (104) est guidé en rotation par au moins un palier (170a) porté par un premier support annulaire (170) fixé audit carter (160), et l'arbre secondaire (114) ou l'arbre intermédiaire (150) est guidé en rotation par au moins un palier (180a) porté par un second support annulaire (180) fixé audit carter (160).

9. Turbomachine selon la revendication précédente, dans laquelle le satellite (120) comprend un axe physique (190) qui le traverse et est entrainé en rotation par cet axe physique, cet axe physique (190) étant porté par ledit second support de palier (180) ou par ledit carter (160).

10. Turbomachine selon la revendication 8, dans laquelle le satellite (120) est guidé en rotation par au moins un palier (200a) porté par un troisième support annulaire (200) fixé audit carter (160), le troisième support annulaire (200) étant situé entre les premier et second supports annulaires (170, 180).

## Patentansprüche

1. Turbotriebwerk mit dreifacher Strömung (100) für ein Luftfahrzeug, umfassend:
- einen Gasgenerator, der mit einer Turbine (1e) ausgerüstet ist, welche eine Turbinenwelle (3) umfasst, die eine Drehachse (X) aufweist,
- ein Leistungsübertragungsmodul (110), das einen Drehmomenteingang (110a), der mit der Turbinenwelle (3) verbunden ist, einen ersten Drehmomentausgang (110b) und einen zweiten Drehmomentausgang (110c) umfasst, wobei dieses Leistungsübertragungsmodul (110) ein mechanisches Getriebe (6) umfasst, das den Drehmomenteingang (110a) und den ersten Drehmomentausgang (110b) umfasst,
- eine Hauptgebläseluftschraube (S), die durch eine Hauptwelle (104) angetrieben wird, die mit dem ersten Drehmomentausgang (110a) gekoppelt ist, wobei sich diese Luftschraube stromaufwärts einer ersten ringförmigen Tülle (17) zum Trennen zweier jeweiliger ringförmiger Strömungsbahnen eines inneren Hauptstromes (F1) und eines äußeren Sekundärstromes (F2) befindet,
- eine Sekundärgebläseluftschraube (S'), die durch eine Sekundärwelle (114) angetrieben wird, die mit dem zweiten Drehmomentausgang (110c) gekoppelt ist, wobei sich diese Luftschraube in der Strömungsbahn des Hauptstromes (F1) und stromaufwärts einer zweiten ringförmigen Tülle (117) zum Trennen zweier jeweiliger ringförmiger Strömungsbahnen eines ersten inneren Stromes (F11) und eines zweiten äußeren Stromes (F12) befindet,
**dadurch gekennzeichnet, dass** das Leistungsübertragungsmodul (110) weiter einen Satelliten (120), unabhängig von dem Getriebe (6) umfasst, und der stromabwärts des Getriebes angeordnet ist, wobei dieser Satellit (120) einerseits mit einer Außenverzahnung (130) der Turbinenwelle (3), und andererseits mit einer Außenverzahnung (140) der Sekundärwelle (114) oder mit einer Zwischenwelle (150) in Eingruff steht, mit dieser Sekundärwelle gekoppelt ist, wobei die Turbinenwelle (3) diese Sekundärwelle (114) oder diese Zwischenwelle (150) koaxial durchquert.

2. Turbotriebwerk nach Anspruch 1, wobei der Satellit (120) einmalig ist.

3. Turbotriebwerk nach Anspruch 1 oder 2, wobei sich der Satellit (120) um eine Drehachse (Z) herum, parallel zur Drehachse (X) der Turbinenwelle (3) erstreckt, wobei der Satellit (120) eine erste Verzahnung (120a) umfasst, die mit der Außenverzahnung (130) der Turbinenwelle (3) in Eingriff steht, und eine zweite Verzahnung (120b), die mit der Außenverzahnung (140) der Sekundärwelle (114) oder der Zwischenwelle (150) in Eingriff steht.

4. Turbotriebwerk nach Anspruch 1 oder 2, wobei sich der Satellit (120) um eine Drehachse (Z) herum erstreckt, die in Bezug auf die Drehachse (X) der Turbinenwelle (3) geneigt ist, wobei der Satellit (120) ein konisches Ritzel (120c) umfasst, das sowohl mit den Außenverzahnungen (130, 140), die ebenfalls konisch sind, der Turbinenwelle (3) und der Sekundärwelle (114) oder der Zwischenwelle (150) in Eingriff steht.

5. Turbotriebwerk nach Anspruch 1 oder 2, wobei sich der Satellit (120) um eine Drehachse (Z) herum erstreckt, die mit der Drehachse (X) der Turbinenwelle (3) zusammenfällt, wobei der Satellit (120) eine kreisrunde Form aufweist, und von der Turbinenwelle (3) durchquert wird, wobei der Satellit (120) eine erste Verzahnung (120a) umfasst, die mit der Außenverzahnung (130) der Turbinenwelle (3) in Eingriff steht, und eine zweite Verzahnung (120b), die mit der Außenverzahnung (140) der Sekundärwelle (114) oder der Zwischenwelle (150) in Eingriff steht.

6. Turbotriebwerk nach einem der vorstehenden Ansprüche, wobei das Getriebe (6) einen Außendurchmesser D1 aufweist, und der Satellit (120) durch einen Umfang umgeben ist, der über der Drehachse (X) der Turbinenwelle (3) zentriert ist, wobei dieser Umfang einen maximalen Außendurchmesser D2 aufweist, der kleiner als D1 ist.

7. Turbotriebwerk nach einem der vorstehenden Ansprüche, wobei sich das Übertragungsmodul (110) im Inneren eines ringförmigen Gehäuses (160) befindet, das zwei koaxiale ringförmige Wände (160a, 160b) umfasst, die zwischen sich die Strömungsbahn des Hauptstroms (F1) definieren.

8. Turbotriebwerk nach dem vorstehenden Anspruch, wobei die Hauptwelle (104), die durch mindestens ein Lager (170a) drehgeführt ist, das von einem ersten ringförmigen Träger (170) getragen wird, der an dem Gehäuse (160) befestigt ist, und die Sekundärwelle (114) oder die Zwischenwelle (150) durch mindestens ein Lager (180a) drehgeführt ist, das von einem zweiten ringförmigen Träger (180) getragen wird, der an dem Gehäuse (160) befestigt ist.

9. Turbotriebwerk nach dem vorstehenden Anspruch, wobei der Satellit (120) eine physische Achse (190) umfasst, die ihn durchquert und durch diese physische Achse in Drehung angetrieben wird, wobei diese physische Achse (190) durch den zweiten Lagerträger (180) oder durch das Gehäuse (160) getragen wird.

10. Turbotriebwerk nach Anspruch 8, wobei der Satellit (120) durch mindestens ein Lager (200a) drehgeführt wird, das von einem dritten ringförmigen Träger (200) getragen wird, der an dem Gehäuse (160) befestigt ist, wobei sich der dritte ringförmige Träger (200) zwischen dem ersten und zweiten ringförmigen Träger (170, 180) befindet.

## Claims

1. A triple-flow turbomachine (100) for an aircraft, comprising:
- a gas generator equipped with a turbine (1e) comprising a turbine shaft (3) with an axis of rotation (X),
- a power transmission module (110) comprising a torque input (110a) connected to said turbine shaft (3), a first torque output (110b) and a second torque output (110c), this power transmission module (110) comprising a mechanical gearbox (6) comprising said torque input (110a) and said first torque output (11 0b),
- a main fan propeller (S) rotatably driven by a main shaft (104) coupled to the first torque output (110a), this propeller being located upstream of a first annular splitter nose (17) for separating two annular ducts for the respective flow of an internal primary flow (F1) and an external secondary flow (F2),
- a secondary fan propeller (S') rotatably driven by a secondary shaft (114) coupled to the second torque output (110c), this propeller being located in the duct for the flow of the primary flow (F1) and upstream of a second annular splitter nose (117) for separating two annular ducts for the respective flow of a first internal flow (F11) and a second external flow (F12),
**characterised in that** the power transmission module (110) further comprises a planet gear (120) independent of said gearbox (6) and arranged downstream of the gearbox, this planet gear (120) being meshed, on the one hand, with an external toothing (130) of the turbine shaft (3) and on the other hand, with an external toothing (140) of said secondary shaft (114) or with an intermediate shaft (150) coupled to this secondary shaft, said turbine shaft (3) passing coaxially through this secondary shaft (114) or this intermediate shaft (150).

2. The turbomachine of claim 1, wherein said planet gear (120) is unique.

3. The turbomachine according to claim 1 or 2, wherein said planet gear (120) extends about an axis of rotation (Z) parallel to said axis of rotation (X) of the turbine shaft (3), said planet gear (120) comprising a first toothing (120a) meshed with the external toothing (130) of the turbine shaft (3), and a second toothing (120b) meshed with the external toothing (140) of the secondary shaft (114) or of the intermediate shaft (150).

4. The turbomachine according to claim 1 or 2, wherein said planet gear (120) extends about an axis of rotation (Z) inclined with respect to said axis of rotation (X) of the turbine shaft (3), said planet gear (120) comprising a conical pinion (120c) meshed with both the external toothings (130, 140), which are also conical, of the turbine shaft (3) and of the secondary shaft (114) or of the intermediate shaft (150).

5. The turbomachine according to claim 1 or 2, wherein said planet gear (120) extends about an axis of rotation (Z) coincident with the axis of rotation (X) of the turbine shaft (3), said planet gear (120) having an annular shape and being passed through by said turbine shaft (3), said planet gear (120) comprising a first toothing (120a) meshed with the external toothing (130) of the turbine shaft (3), and a second toothing (120b) meshed with the external toothing (140) of the secondary shaft (114) or of the intermediate shaft (150).

6. The turbomachine according to one of the preceding claims, wherein the gearbox (6) comprises an external diameter D1, and the planet gear (120) is surrounded by a circumference centred on said axis of rotation (X) of the turbine shaft (3), this circumference having a maximum external diameter D2 which is smaller than D1.

7. The turbomachine according to one of the preceding claims, wherein the transmission module (110) is located inside an annular casing (160) which comprises two coaxial annular walls (160a, 160b) defining between them said duct for the flow of the primary flow (F1).

8. The turbomachine according to the preceding claim, wherein the main shaft (104) is rotatably guided by at least one bearing (170a) carried by a first annular support (170) attached to said casing (160), and the secondary shaft (114) or the intermediate shaft (150) is rotatably guided by at least one bearing (180a) carried by a second annular support (180) attached to said casing (160).

9. The turbomachine according to the preceding claim, wherein the planet gear (120) comprises a physical axle (190) which passes through it and is rotatably driven by this physical axle, this physical axle (190) being carried by said second bearing support (180) or by said casing (160).

10. The turbomachine according to claim 8, wherein the planet gear (120) is rotatably guided by at least one bearing (200a) carried by a third annular support (200) attached to said casing (160), the third annular support (200) being located between the first and second annular supports (170, 180).
